# EUROPÄISCHE PATENTSCHRIFT

(11) **EP 0 622 099 B1**
(45) Veröffentlichungstag und Bekanntmachung des Hinweises auf die Patenterteilung: **15.09.1999**
(21) Anmeldenummer: 94106685.4
(22) Anmeldetag: 28.04.1994
(51) Int. Cl.: B01D 33/04

(54) **Trenn- und Filtriervorrichtung zur Fest/Flüssigtrennung, insbesondere mit Trockenhilfe**
Separating and filtering device for solid/liquid separation, especially with drying aid
Dispositif de séparation et de filtration pour la séparation solide/liquide, en particulier avec séchage assisté

(30) Priorität: 28.04.1993 DE 9306367 U; 08.02.1994 DE 9402095 U
(43) Veröffentlichungstag der Anmeldung: 02.11.1994
(73) Patentinhaber: Wilkes, Kurt, D-88400 Biberach (DE)
(72) Erfinder: Wilkes, Kurt, D-88400 Biberach (DE)
(74) Vertreter: König, Beate, Dipl.-Phys. Dr.

(56) Entgegenhaltungen:
- AT-B- 372 670
- CH-A- 447 022
- CH-A- 543 293
- DE-B- 1 761 627
- DE-U- 9 306 279
- US-A- 1 855 808
- US-A- 3 931 012
- US-A- 3 977 514

## Beschreibung

Die Erfindung betrifft ein Schwerkraftfilter vom Flachbettyp mit einem Filterband, einem Bandantrieb mit Umlenkwalzen, einer mechanischen Bandführung und einer Bandreinigungsvorrichtung, einer rein mechanischen Bandführung, die für den Geradlauf des Bandes vorgesehen ist, wobei eine Führung an den Führungswalzen und entsprechende Führungsmittel auf der Bandunterseite vorgesehen sind, einer Filtermulde, einer Wanne zum Sammeln von Flüssigkeit unterhalb des Filterbandes.

Es ist eine Vielzahl von Flachbett-Bandfiltern bekannt, die z.B. nach dem Prinzip der Schwerkraftfilterung oder mit zusätzlichem Vakuum arbeiten. Der Einsatzbereich der Flachbett-Bandfilter umfaßt Anwendungen mit Durchsätzen bis etwa 1000 Liter/Minute. Definitionsgemäß ist das Filterbett flach und auf der Unterseite durch ein Filterband begrenzt, das auf einem Endlosträgerband läuft. Bei dem Filterband handelt es sich gewöhnlich um Filtervlies, das von einer Vorratsrolle abgezogen wird und auf der Austragseite einem Abfallbehälter zur Entsorgung zugeführt wird. Ein Schlammkasten oder dergleichen dient zum Sammeln des ausgetragenen Filterkuchens.

Bei Betrieb der herkömmlichen Flachbett-Bandfilter erweist es sich als zunehmend nachteilig, daß das Filtervlies nicht wieder verwendet werden kann, sondern vielmehr gewöhnlich sogar noch als Sondermüll behandelt werden muß.

Des weiteren kommt es insbesondere bei Flachbett-Bandfiltern zu einem unerwünschten Austrag von Flüssigkeit dadurch, daß die Flüssigkeit im Band verbleibt und mit diesem den Filtrierbereich verläßt. Dies führt zu einer unerwünschten Herabsetzung des Filterwirkungsgrades, da der betreffende Flüssigkeitsanteil nicht Filtrat wird, noch in den Filtrierraum zurückgeführt wird.

Aus der US-A-3 931 012 ist eine Einrichtung zur Trennung von Feststoffen von Flüssigkeiten mit einer Trenneinrichtung (Separator 10) bekannt, von der die Feststoffe einer Verbrennungseinheit zugeführt werden. Es wird ein Endlosfilterband vorgeschlagen, das aus Metalldraht oder einem synthetischen Gewebe besteht und dessen Material so flexibel ist, daß es eine konkave Höhlung bildet, in der sich das Feststoff-Flüssigkeitsgemisch sammelt. Die Form des Filterbandes soll dabei hängemattenartig sein, wobei durch die mittlere Einbauchung auch ein Überfließen von Flüssigkeit durch die Randbereiche vermieden wird und auf Zusatzwände, Leitmittel etc. verzichtet werden kann (vgl. Spalte 6, Zeilen 58 bis 60). Somit wird bei der bekannten Trenneinrichtung die Muldenausführung ohne seitliche Begrenzung allein durch die Schwerkraft der Schmutzflüssigkeit bewirkt, so daß eventuell zuviel zugeführte Schmutzflüssigkeit seitlich frei überlaufen kann.

Bei der bekannten Trenneinrichtung sind zusätzlich zu den Umlenkwalzen 60, 61 Spannwalzen 70, 71 vorgesehen, wodurch sich eine erhöhte Bauhöhe ergibt. Als Bandführung ist ein Zahnriemen 80 offenbart, der mit dem Filterband durch Schraubverbindungen 82 verbunden ist und dessen Zähne in Zahnscheiben 79 rechts und links auf den Umlenkwalzen eingreifen. Diese Zahnriemenausführung hat somit nicht nur Führungsfunktion, sondern insbesondere auch Antriebsfunktion.

Die DE-A-1 761 627 zeigt ein Schwerkraftbandfilter, das als Vakuumfilter ausgebildet ist. Die Filtermulde wird nur im Bodenbereich vom Filterband und an den unteren seitlichen Bereichen von schräggestellten Platten ("dachförmige Führung 16") mit darüber geführtem Band gebildet. Durch diese Anordnung soll gewährleistet werden, daß die verschiedenen Flüssigkeiten nicht ineinanderfließen. Ein Weglaufen des Bandes in seitlicher Richtung, wie dies durch eine Bandführung im Sinne der Erfindung verhindert werden soll, wird durch diese schräggestellten Platten nicht vermieden. Das Band läuft auf einem Trägerrost und wird mittels beidseitiger Kettenführungen geführt (vgl. Spalte 2, Zeilen 24 bis 25).

Bei einer solchen Kettenführung ist Voraussetzung, daß sich das Band nicht längt, d.h. daß es seine Länge beibehält. Andernfalls kommt es zu fehlerhaftem Greifen der Haltemittel in die Kettenglieder. Die Haltemittel greifen dabei teilweise nicht in die zugeordneten Öffnungen und teilweise kommt es zu unerwünschtem Zug mit entsprechend hohen Beanspruchungen des Bandes. Weiterhin eignet sich ein solcher Führungstyp z.B. auch nicht bei Kettenradführungen mit am Band angebrachter Kette, wenn das Band dünn ist, da es auch dann zu einem Reißen des Bandes kommen kann.

Der Erfindung liegt die Aufgabe zugrunde, ein Schwerkraftfilter vom Flachbettyp zu schaffen, bei dem ein hoher Filterwirkungsgrad ohne Filterhilfsmittel erreicht wird.

Diese Aufgabe ist erfindungsgemäß bei einem Schwerkraftfilter mit den Merkmalen des Anspruchs 1 gelöst. Vorteilhafte Weiterbildungen des erfindungsgemäßen Schwerkraftfilters sind Gegenstand der abhängigen Ansprüche.

Ein erfindungsgemäßes Schwerkraftfilter vom Flachbettyp umfaßt somit ein Filterband, einen Bandantrieb mit Umlenkwalzen, eine mechanischen Bandführung und eine Bandreinigungsvorrichtung, eine rein mechanischen Bandführung, die für den Geradlauf des Bandes vorgesehen ist, wobei eine Führung an den Führungswalzen und entsprechende Führungsmittel auf der Bandunterseite vorgesehen sind, eine Filtermulde, eine Wanne zum Sammeln von Flüssigkeit unterhalb des Filterbandes. Als seitliche Begrenzung des Filtrierraums sind starr gelagerte Seitenscheiben vorgesehen, deren Unterseite gebogen ausgebildet ist, derart, daß das Band zwischen den Umlenkwalzen eine Filtermulde bildet. Die Führung umfaßt wenigstens eine Längsnut in den Umlenkwalzen und auf der Bandunterseite sind entsprechend als Führungsmittel in Längsrichtung Vorsprünge angebracht und die Wanne weist eine Einrichtung zum Fördern der Flüssigkeit in den Filtrierraum auf.

Als Filterband kann ein Endlosband vorgesehen sein. Hierdurch entfallen die Entsorgungsprobleme weitgehend. Desgleichen müssen auch nicht ständig Filterhilfsmittel (z.B. Papiervlies) nachgekauft und eingelegt werden. Auch wird kein zusätzliches Trägerband mehr benötigt. Es ist lediglich erforderlich, einen glatten Geradlauf des Bandes sicherzustellen. Hierzu dient die Bandführung. Zweckmäßig ist das Filterband ein flexibles, zugfestes poröses Band aus einem korrosionsfesten Werkstoff. Bei diesem kann es sich z.B. um Edelstahl, Kunststoff oder einem alternativen Werkstoff handeln.

Es ist indessen auch ein Reversierbetrieb bei der oben erwähnten Filterausführung mit Filtermulde unter Verwendung einer mit Öffnungen versehenen Umlenkwalze möglich. In diesem Fall wird kein Endlosband eingesetzt (vgl. auch DE-U-93 06 279).

Die Bandführung ist vorteilhaft so ausgestaltet, daß zwischen den Umlenkwalzen eine Führung unterhalb des Bandes sowie entsprechende Führungsmittel auf der Bandunterseite vorgesehen sind. Diese Maßnahmen sind unkompliziert und können einfach ausgeführt werden. Es entfallen aufwendige Bandsteuerungen o.ä., wie sie im Bereich der Bandfilterung bekannt sind. Für größere Filtereinheiten können auch zwischen den Umlenkwalzen eine Führung oberhalb des Bandes und entsprechende Führungsmittel vorgesehen sein.

Vorteilhaft ist eine Nut als Führung vorgesehen. Es können sich auch eine oder mehrere Nuten in den Umlenkwalzen befinden. Auf der Bandunterseite sind entsprechend Vorsprünge wie z.B. Führungsbolzen angebracht.

Das Filterbett ist seitlich durch starr gelagerte Seitenscheiben begrenzt, die auf der Unterseite zweckmäßig eine Gleitfläche für das Band aufweisen. Auf diese Weise ist eine sichere Abdichtung des Filtrierraums ermöglicht, die zugleich wenig Teile erfaßt und damit kostengünstig ist. Im Fall der Anwendung bei einem Muldenbandfilter sind indessen die Seitenscheiben beweglich.

Die Seitenscheiben sind vorteilhaft aus Kunststoff. Alternativ können sie auf der Unterseite eine Beschichtung aufweisen. Der Bandlauf ist durch derartige Materialien nicht beeinträchtigt. Vielmehr erfolgt er reibungslos mit wie erwähnt guten Abdichtungseigenschaften.

Die Unterseite der Seitenscheibe ist gebogen in der Art ausgebildet, daß das Band zwischen den Umlenkwalzen eine Filtermulde bildet, kann die Filterleistung wirksam ohne Einsatz besonderer Vorrichtungen erhöht werden. Dabei ergibt sich indessen noch nicht die Notwendigkeit von Mitnehmern oder dergleichen zur Unterstützung des Austrags aus der Filtermulde.

Eine weitere Unterstützung des Filtriervorgangs ergibt sich, wenn der Einlauf der Fest/Flüssig-Mischung gegenüberliegend dem Feststoffaustrag vorgesehen ist. Bei einer derartigen Anordnung ist eine maximale Sedimentationsstrecke und Beruhigungszone für den Filterkuchen vorgesehen.

Ein bevorzugtes Ausführungsbeispiel eines erfindungsgemäßen Schwerkraftbandfilters umfaßt eine Verteilereinrichtung am Einlauf, die sich über im wesentlichen die gesamte Bandbreite erstreckt. Auf diese Weise ist eine gleichmäßige Verteilung der Fest/Flüssig-Mischung über die Filterbreite sichergestellt, so daß auch die Filtrierbedingungen im wesentlichen gleich sind.

Es ist vorteilhaft eine Reinigungsvorrichtung vorgesehen, die das Filterband mit Fluid von der Sauberseite zur Schmutzseite hin durchströmt. Darunter ist eine Auffangeinrichtung für Feststoffe und/oder ablaufende, verschmutzte Reinigungsflüssigkeit vorgesehen. Als Fluid kann bei bestimmten Anwendungen zweckmäßig Druckluft verwendet werden. Die Reinigung des Endlosbandes verhindert, daß es zu Zusetzungen kommen kann.

Es ist auch vorzugsweise eine Rückführung von überlaufender und eventueller Leckflüssigkeit aus dem Filtrierraum in die Auffangeinrichtung vorgesehen. Selbst wenn es zu einer Undichtigkeit kommen sollte, gelangt die Leckflüssigkeit nicht in den Reinbereich, sondern kann wieder in die Filtriermischung eingebracht werden. Zweckmäßig ist dabei eine Auffangeinrichtung zum seitlichen Sammeln der Leck- und Reinigungsflüssigkeit vorgesehen.

Eine deutliche Verbesserung des Wirkungsgrades von Bandfiltern ergibt sich durch den Einsatz einer Trockenhilfe, d.h. wenn die auslaufseitige Umlenkwalze einen mit Öffnungen versehenen Mantel aufweist, der z.B. gelocht ist oder mit Schlitzen, Spalten oder dergleichen versehen ist. Vorzugsweise handelt es sich dabei um eine Lochblechwalze. Alternativ könnte als Trockenhilfe auch z.B. ein Spaltsieb eingesetzt werden. Die Perforation bzw. die Öffnungen des Walzenmantels ermöglichen es, daß noch im Band befindliche Flüssigkeit aus den Bandbereichen mit freier Fläche durch die Öffnungsbereiche nach innen abgeleitet wird und sich nicht im Band festsetzen kann. Somit gelangt dieser Filtratanteil wieder in den Filter zurück, wodurch der andernfalls durch Mitnahme im Band erfolgende Flüssigkeitsaustrag erheblich herabgesetzt werden kann. Wesentlich ist, daß ausreichend große freie Flächen für das Ablaufen der Flüssigkeit in den Filterinnenraum zur Verfügung stehen.

Ein besonders großer Wirkungsgrad des Einsatzes einer Lochblechwalze gemäß der Erfindung ergibt sich bei Flachbettfiltern, da diese im Vergleich zu anderen Filtertypen einen besonders großen Flüssigkeitsaustrag aufweisen.

Eine Lochblechwalze läßt sich nicht nur bei Flachbettfiltern, sondern auch vorteilhaft bei anderen Filtertypen wie z.B. bei Muldenbandfiltern einsetzen, denn auch dort kann der Flüssigkeitsaustrag, wenn auch nicht im selben großen Maße, verringert und damit der Wirkungsgrad der Filtervorrichtung verbessert werden.

Die Erfindung wird vorteilhaft weiter anhand eines bevorzugten Ausführungsbeispiels und der Zeichnung beschrieben. In der Zeichnung zeigen:

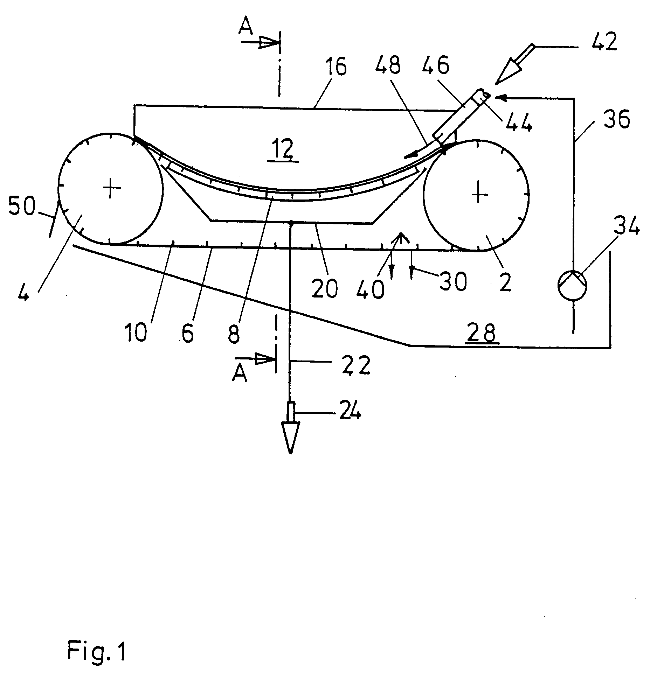

- Fig. 1: eine schematische Seitenansicht eines Flachbett-Bandfilters und

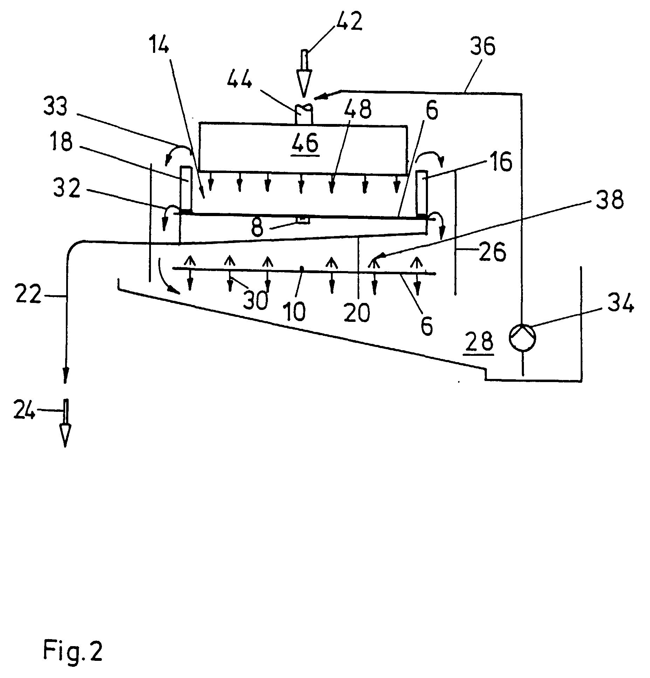

- Fig. 2: eine schematische Ansicht in Richtung des Einlaufs gemäß Pfeilen A-A in Fig. 1.

Ein erfindungsgemäßes Flachbett-Bandfilter umfaßt zwei Umlenkwalzen 2, 4, auf denen ein Endlosfilterband 6 umläuft. Im gezeigten Ausführungsbeispiel ist das Endlosband 6 ein flexibles, zugfestes, korrosionsfeste Gittergeflecht bzw. -gewebe aus Edelstahl. Für das Band 6 ist eine Führung 8 vorgesehen, die sich zwischen den Umlenkwalzen auf der Bandinnenseite und in Form einer Nut in den Umlenkwalzen befindet. Auf der Bandunterseite sind entsprechende Führungsbolzen 10 angebracht. Das Obertrum des Filterbandes ist zwischen den Umlenkwalzen 2, 4 muldenartig abgesenkt, so daß sich eine flache Filtermulde 12 bildet. Durch diese erhält der Filtrierraum 14 eine größere Tiefe und der Filterwirkungsgrad ist erhöht. Seitlich ist der Filtrierraum, d.h. das Filterbett, durch starr gelagerte Seitenscheiben 16, 18 begrenzt. Diese weisen auf der Unterseite eine Gleitfläche auf, entlang der sich das Band abdichtend bewegt.

Unterhalb des Obertrums des Filterbandes 6 befindet sich ein Leitblech bzw. eine Auffangeinrichtung 20 zum Sammeln und Abführen des Filtrats. Der Abfluß und die Weiterleitung des Filtrats sind durch Pfeile 22, 24 angedeutet. Eine seitliche Abdeckung 26 dient als Spritzschutz und eine Wanne 28 ist für Reinigungsflüssigkeit vorgesehen. Die Wanne 28 sammelt verschmutzte Reinigungsflüssigkeit von der Filterbandreinigung sowie eventuell aus dem Filtrierraum überlaufende verschmutzte Flüssigkeit und/oder Leckflüssigkeit aus dem Filtrierraum. Sie kann ferner ggf. aus der Auffangeinrichtung 20 überlaufendes Filtrat aufnehmen. Dies ist mittels Pfeilen 30, 32, 33 angedeutet. Eine in der Wanne 28 angeordnete Pumpe 34 fördert dort befindliche Reinigungsflüssigkeit über eine Leitung 36 in den Filtrierraum 14.

Oberhalb des Untertrums des Filterbandes 6 befindet sich eine Reinigungsvorrichtung 38 in Form mehrerer Reinigungsdüsen 40, die das Filterband 6 mit Fluid von innen nach außen durchdüsen, wobei Feststoffe und/oder ablaufende, verschmutzte Reinigungsflüssigkeit in die Wanne 28 eingeleitet werden. Das Band wird auf diese Weise von noch haftenden Feststoffpartikeln freigespült.

Für die Zuführung 42 der Fest/Flüssigkeit-Mischung ist ein Zuleitungsrohr 44 vorgesehen, das in eine Verteilereinrichtung 46 mündet, die sich im wesentlichen über die gesamte Breite des Filterbetts erstreckt. Die Verteilereinrichtung 46 ist kastenförmig ausgeführt und in Richtung des Bandlaufs, d.h. schräg nach unten geneigt, angeordnet. Der Auslauf der Fest/Flüssigkeit-Mischung ist durch Pfeile 48 angedeutet. Im unteren Umfangsbereich der auslaufseitigen Umlaufwalze 4 ist ein Abstreifer 50 dargestellt, der das Band 6 auf der Schmutzseite von Filterkuchen befreit.

Vorstehend ist die Erfindung anhand eines bevorzugten Ausführungsbeispiels und ausgewählter Merkmale beschrieben und dargestellt worden.

## Patentansprüche

1. Schwerkraftfilter vom Flachbettyp, mit
einem Filterband (6), einem Bandantrieb mit Umlenkwalzen (2, 4),
einer mechanischen Bandführung und einer Bandreinigungsvorrichtung (38, 40),
einer rein mechanischen Bandführung, die für den Geradlauf des Bandes (6) vorgesehen ist, wobei eine Führung (8) an den Führungswalzen (2, 4) und entsprechende Führungsmittel (10) auf der Bandunterseite vorgesehen sind,
einer Filtermulde (12),
einer Wanne (28) zum Sammeln von Flüssigkeit unterhalb des Filterbandes (6),
dadurch **gekennzeichnet,** daß
als seitliche Begrenzung des Filtrierraums (14) starr gelagerte Seitenscheiben (16, 18) vorgesehen sind, deren Unterseite gebogen ausgebildet ist, derart, daß das Band (6) zwischen den Umlenkwalzen (2, 4) eine Filtermulde bildet, und
die Führung (8) wenigstens eine Längsnut in den Umlenkwalzen (2, 4) umfaßt und auf der Bandunterseite entsprechend als Führungsmittel in Längsrichtung Vorsprünge (10) angebracht sind und
die Wanne (28) eine Einrichtung (34) zum Fördern der Flüssigkeit in den Filtrierraum (14) aufweist.

2. Bandfilter nach Anspruch 1, dadurch **gekennzeichnet,** daß das Filterband (6) ein Endlosband ist.

3. Bandfilter nach Anspruch 1 oder 2, dadurch **gekennzeichnet,** daß das Filterband (6) ein flexibles, zugfestes poröses Band aus einem korrosionsfesten Werkstoff ist.

4. Bandfilter nach einem der Ansprüche 1 bis 3, dadurch **gekennzeichnet,** daß das Endlosband (6) aus Edelstahl oder Kunststoff ist.

5. Bandfilter nach einem der Ansprüche 1 bis 4, dadurch **gekennzeichnet,** daß die Vorsprünge (10) Führungsbolzen sind.

6. Bandfilter nach einem der Ansprüche 1 bis 5, dadurch **gekennzeichnet,** daß zwischen den Umlenkwalzen eine Führung oberhalb des Bandes und entsprechende Führungsmittel vorgesehen sind.

7. Bandfilter nach einem der Ansprüche 1 bis 6, dadurch **gekennzeichnet,** daß die Seitenscheiben (16, 18) auf der Unterseite eine Gleitfläche für das Band (6) aufweisen.

8. Bandfilter nach Anspruch 7, dadurch **gekennzeichnet,** daß die Seitenscheiben aus Kunststoff sind.

9. Bandfilter nach Anspruch 7 oder 8, dadurch **gekennzeichnet,** daß die Seitenscheiben auf der Unterseite eine Beschichtung aufweisen.

10. Bandfilter nach einem der Ansprüche 1 bis 9, dadurch **gekennzeichnet,** daß der Einlauf (42) der Fest/Flüssig-Mischung gegenüberliegend dem Feststoffaustrag vorgesehen ist.

11. Bandfilter nach Anspruch 10, dadurch **gekennzeichnet,** daß eine Verteilereinrichtung (46) am Einlauf vorgesehen ist, die sich über im wesentlichen die gesamte Bandbreite erstreckt.

12. Bandfilter nach einem der Ansprüche 1 bis 11, dadurch **gekennzeichnet,** daß eine Reinigungsvorrichtung (38) vorgesehen ist, die das Filterband mit Fluid von der Sauberseite zur Schmutzseite hin durchdüst, wobei darunter eine Auffangeinrichtung (28) für Feststoffe und/ oder ablaufende, verschmutzte Reinigungsflüssigkeit vorgesehen ist.

13. Bandfilter nach Anspruch 12, dadurch **gekennzeichnet,** daß eine Rückführung (34, 36) von Leckflüssigkeit und eventuell überlaufender Flüssigkeit aus dem Filtrierraum in die Auffangeinrichtung vorgesehen ist.

14. Bandfilter nach Anspruch 12 oder 13, dadurch **gekennzeichnet,** daß die Auffangeinrichtung (26, 28) zum seitlichen Sammeln der Leck- und verschmutzten Reinigungsflüssigkeit vorgesehen ist.

15. Bandfilter nach einem der Ansprüche 1 bis 14, dadurch **gekennzeichnet,** daß die auslaufseitige Umlenkwalze einen mit Öffnungen versehenen Mantel aufweist.

16. Bandfilter nach einem der Ansprüche 1 bis 15, dadurch **gekennzeichnet,** daß die auslaufseitige Umlenkwalze eine Lochblechwalze ist.

## Claims

1. Gravity filter of the flat bed type, comprising
a filter band (6), a band drive with direction-changing rollers (2, 4),
a mechanical band guide and a band cleaning device (38, 40),
a purely mechanical band guide which is provided for the linear travel of the band (6), where a guide (8) is provided on the guide rollers (2, 4) and corresponding guide means (10) are provided on the underside of the band,
a filter basin (12),
a trough (28) for collecting liquid underneath the filter band (6),
characterised in that
rigidly mounted side plates (16, 18) are provided as lateral boundaries of the filtration chamber (14), with the undersides of the side plates being curved in such manner that the band (6) forms a filter basin between the direction-changing rollers (2, 4), and
the guide (8) includes at least one longitudinal groove in the direction-changing rollers (2, 4) and projections (10) are fitted on the underside of the band correspondingly as guide means in the longitudinal direction, and
the trough (28) comprises a device (34) for supplying the liquid to the filtration chamber (14).

2. Band filter according to claim 1, characterised in that the filter band (6) is an endless band.

3. Band filter according to claim 1 or 2, characterised in that the filter band (6) is a flexible, high-tensile porous band of a corrosion-resistant material.

4. Band filter according to one of claims 1 to 3, characterised in that the endless band (6) is of stainless steel or plastics material.

5. Band filter according to one of claims 1 to 4, characterised in that the projections (10) are guide pins.

6. Band filter according to one of claims 1 to 5, characterised in that between the direction-changing rollers there are provided a guide above the band and corresponding guide means.

7. Band filter according to one of claims 1 to 6, characterised in that the side plates (16, 18) have a sliding surface for the band (6) on the underside.

8. Band filter according to claim 7, characterised in that the side plates are of plastics material.

9. Band filter according to claim 7 or 8, characterised in that the side plates have a coating on the underside.

10. Band filter according to one of claims 1 to 9, characterised in that the inlet (42) for the solid/liquid mixture lies opposite the removal location for solid material.

11. Band filter according to claim 10, characterised in that a distribution device (46) is provided at the inlet which extends over substantially the whole width of the band.

12. Band filter according to one of claims 1 to 11, characterised in that a cleaning device (38) is provided which flushes through the filter band with liquid from the clean side to the dirty side, and wherein below the cleaning device is provided a collecting device (28) for solids and/or run-off contaminated cleaning liquid.

13. Band filter according to claim 12, characterised in that return means (34, 36) is provided for leakage liquid and any liquid overflowing from the filtration chamber into the collecting device.

14. Band filter according to claim 12 or 13, characterised in that the collecting device (26, 28) is provided for the lateral collection of leakage liquid and contaminated cleaning liquid.

15. Band filter according to one of claims 1 to 14, characterised in that the direction-changing roller on the discharge side comprises a shell provided with apertures.

16. Band filter according to one of claims 1 to 15, characterised in that the direction-changing roller on the discharge side is a perforated sheet roller.

## Revendications

1. Filtre par gravité du type à lit horizontal, comprenant une bande de filtre (6), un entraînement de de bande avec des tambours de renvoi (2, 4),
un guidage mécanique et un dispositif de nettoyage de bande (38, 40),
un guidage de bande purement mécanique assurant le défilement rectiligne de la bande (6), un guidage (8) étant prévu au niveau des tambours de guidage (2, 4) et des moyens de guidage (10) adaptés étant prévus sur la face inférieure de la bande,
une trémie de filtre (12),
une cuve (28) pour la collecte de liquide, placée au dessous de la bande de filtre (6),
caractérisé par le fait
qu'il est prévu comme délimitation latérale de la chambre de filtre (14), des plaques latérales (16, 18) montées rigidement, dont le bord inférieur est plié de telle sorte que la bande (6), entre les tambours de renvoi (2, 4), forme une trémie de filtre,
que le guidage (8) comprend au moins une rainure longitudinale dans les tambours de renvoi (2, 4) et des saillies (10) correspondantes disposées comme moyens de guidage dans la direction longitudinale, sur la face inférieure de la bande et
que la cuve (28) comporte un dispositif (34) pour amener le liquide dans la chambre de filtre (14).

2. Filtre à bande selon la revendication 1, caractérisé par le fait que la bande de filtre (6) est une bande sans fin.

3. Filtre à bande selon la revendication 1 ou 2, caractérisé par le fait que la bande de filtre (6) est une bande flexible, résistante à la traction, poreuse en une matière résistante à la corrosion.

4. Filtre à bande selon une des revendications 1 à 3, caractérisé par le fait que la bande sans fin (6) est en acier allié ou en matière plastique.

5. Filtre à bande selon une des revendications 1 à 4, caractérisé par le fait que les saillies (10) sont des picots de guidage.

6. Filtre à bande selon une des revendications 1 à 5, caractérisé par le fait qu'un guidage ainsi que des moyens de guidage correspondants sont prévus au dessus de la bande, entre les tambours de renvoi.

7. Filtre à bande selon une des revendications 1 à 6, caractérisé par le fait que les plaques latérales (16, 18), au niveau du bord inférieur, comportent une surface de glissement pour la bande (6).

8. Filtre à bande selon la revendication 7, caractérisé par le fait que les plaques latérales sont en matière plastique.

9. Filtre à bande selon la revendication 7 ou 8, caractérisé par le fait que les plaques latérales comportent un revêtement sur le bord inférieur.

10. Filtre à bande selon une des revendications 1 à 9, caractérisé par le fait que l'entrée (42) du mélange solides/liquide est prévue à l'opposé de l'extraction des solides.

11. Filtre à bande selon la revendication 10, caractérisé par le fait qu'il est prévu, à l'entrée, un dispositif de répartition (46) qui s'étend essentiellement sur toute la largeur de la bande.

12. Filtre à bande selon une des revendications 1 à 11, caractérisé par le fait qu'il est prévu un dispositif de nettoyage de bande (38) qui arrose la bande de filtre avec du fluide, du côté propre vers le côté souillé, un dispositif de collecte (28) pour les produits solides et/ou le liquide de nettoyage chargé en impuretés étant prévu au dessous.

13. Filtre à bande selon la revendication 12, caractérisé par le fait qu'il est prévu un dispositif de retour (34, 36) pour le liquide de fuite et le liquide débordant éventuellement de la chambre de filtre dans le dispositif de collecte.

14. Filtre à bande selon la revendication 12 ou 13, caractérisé par le fait que le dispositif de collecte (26, 28) est prévu pour collecter latéralement le liquide de fuite et le liquide de nettoyage chargé en impuretés.

15. Filtre à bande selon une des revendications 1 à 14, caractérisé par le fait que le tambour de renvoi situé côté sortie comporte une paroi extérieure pourvue d'orifices.

16. Filtre à bande selon une des revendications 1 à 15, caractérisé par le fait que le tambour de renvoi situé côté sortie est un tambour en tôle perforée.
